# EUROPÄISCHE PATENTANMELDUNG

(11) **EP 2 680 203 A1**
(43) Veröffentlichungstag der Anmeldung: **01.01.2014**
(21) Anmeldenummer: 12075079.9
(22) Anmeldetag: 29.06.2012
(51) Int. Cl.: G06Q 20/32

(54) **System und Verfahren für bargeldlosen Bezahlvorgang**

(71) Anmelder: Deutsche Telekom AG, 53113 Bonn (DE)
(72) Erfinder: Ren, Zhiyun, Dr., 12357 Berlin (DE); Zhou, Jianshen, Dr., 12357 Berlin (DE); Heuer, Jörg, 14163 Berlin (DE); Runge, Fred, 15806 Wünsdorf (DE)
(74) Vertreter: Brandt, Detlef

(57) **Zusammenfassung**

Die vorgeschlagene Lösung für einen bargeldlosen Bezahlvorgangs geht von einem Bezahlsystem aus, welches als Basiskomponenten ein zur Autorisierung des Bezahlvorgangs zu verwendendes mobiles Endgerät (1) eines Käufers, eine elektronische Kasseneinrichtung (2) eines Verkäufers und mindestens eine computerbasierte Backendeinrichtung (3) eines Zahlungsdienstleisters umfasst. Dabei weist das System mindestens eine primäre und eine sekundäre Überprüfungsdomäne für einen Vergleich bei der Autorisierung des Bezahlvorgangs an dem mobilen Endgerät (1) erfasster biometrischer Daten des Käufers mit biometrischen Referenzdaten auf. Die primäre Überprüfungsdomäne wird durch das mobile Endgerät (1) des Käufers und die sekundäre Überprüfungsdomäne durch eine der anderen Basiskomponenten (2, 3) des Systems gebildet. Entsprechend dem Verfahren wird der Bezahlvorgang durch den Käufer mittels des von ihm mitgeführten mobilen Endgeräts (1) gegenüber der Kasseneinrichtung (2) autorisiert, wobei sich der Käufer hierzu gegenüber dem System authentifiziert. Dabei erfolgt ein Vergleich der am mobilen Endgerät (1) erfassten biometrischen Daten mit den biometrischen Referenzdaten jedenfalls durch die erste Überprüfungsdomäne, gegebenenfalls aber zusätzlich nochmals durch die zweite Überprüfungsdomäne.

## Beschreibung

Die Erfindung betrifft die Durchführung eines bargeldlosen Bezahlvorgangs. Sie bezieht sich hierbei auf einen Bezahlvorgang, welcher durch einen Käufer mittels eines von ihm mitgeführten mobilen Endgeräts autorisiert wird. Gegenstand der Erfindung sind dabei ein System und ein Verfahren, welche eine im Hinblick auf die Autorisierung des Bezahlvorgangs mittels eines mobilen Endgeräts sichere bargeldlose Bezahlung ermöglichen.

Das Prinzip des bargeldlosen Zahlungsverkehrs mit der Möglichkeit einer bargeldlosen Bezahlung vor Ort, das heißt am Verkaufspunkt, dem sogenannten Point of Sale, wird bereits seit vielen Jahren intensiv genutzt. Hierbei kommen für die Bezahlung mit einem Magnetstreifen ausgestattete oder als Chipkarten ausgebildete EC-Karten oder Kreditkarten zum Einsatz. Mittels einer solchen Karte autorisiert der Käufer dabei den Bezahlvorgang, wobei er sich durch die Eingabe einer PIN an einem die Karte einlesenden Kassenterminal oder durch Leisten der Unterschrift authentifiziert. Nach erfolgreicher Authentifizierung des Käufers gilt der Kaufvorgang als autorisiert und wird durch technische Einrichtungen beziehungsweise Komponenten eines entsprechenden bargeldlosen Bezahlsystems ausgeführt. Hierzu werden durch die Kasseneinrichtung von der zur Bezahlung verwendeten Karte ausgelesene Daten zusammen mit Daten zum Kauf, wie Kaufbetrag und Name des Verkäufers beziehungsweise der Verkaufseinrichtung, über eine Datenverbindung von der Kasseneinrichtung an computerbasierte Backendeinrichtungen eines Zahlungsdienstleisters übertragen. Durch die vorgenannten Backendeinrichtungen des Zahlungsdienstleisters werden die mit dem Bezahlvorgang verbundenen finanziellen Transaktionen, wie insbesondere die Belastung eines mit der zum Kauf verwendeten Karte assoziierten Kontos des Käufers mit dem jeweiligen Kaufbetrag und die gegebenenfalls unter Abzug von Gebühren erfolgende Gutschrift eines korrespondierenden Betrages auf einem Konto des Verkäufers, abgewickelt. Der Abwicklung der entsprechenden Transaktionen liegt hierbei ein Vertragsverhältnis des die jeweilige Karte für die bargeldlose Bezahlung verwendenden Käufers mit dem Zahlungsdienstleister und Ausgeber der Karte zugrunde.

Der hohe Verbreitungsgrad mobiler Endgeräte, wie Mobiltelefone, Smartphones oder Tablet-PCs, hat zu der Überlegung geführt, derartige, von den meisten Käufern ohnehin im Allgemeinen ständig mitgeführte mobile Endgeräte anstelle der vorgenannten extra und häufig auch in größerer Zahl mitgeführten Karten für die Autorisierung von Bezahlvorgängen zu verwenden. Hierbei wird davon ausgegangen, dass ein Käufer, welcher ein mobiles Endgerät zur bargeldlosen Bezahlung verwendet, auch der Inhaber des betreffenden Endgeräts ist, welcher zumindest im Falle eines Mobiltelefons oder Smartphones über die von diesem aufgenommene SIM-Karte und das zwischen ihm und dem Mobilfunkprovider bestehende Vertragsverhältnis identifizierbar ist. Zur Autorisierung eines Bezahlvorgangs und damit zur Initiierung seiner Durchführung beziehungsweise Abwicklung bringt der Käufer beispielsweise ein von ihm mitgeführtes mobiles Endgerät nach Aufforderung durch den Verkäufer in die Nähe eines an beziehungsweise in der Kasseneinrichtung angeordneten Transponders. Dabei sind sowohl das mobile Endgerät als auch die Kasseneinrichtung mit entsprechenden Sende- und Empfangsmitteln für eine funkgestützte Datenkommunikation ausgestattet, welche eine drahtlose Übertragung von Daten über eine Entfernung von zumindest wenigen Zentimetern ermöglicht. Durch Übertragung auf der SIM-Karte des mobilen Endgeräts gehaltener Identifikationsdaten an die Kasseneinrichtung wird hierbei der Bezahlvorgang autorisiert.

Als problematisch ist es dabei anzusehen, dass bei den bislang verwendeten Verfahren im Allgemeinen keine weitere Authentifizierung des Käufers vorgesehen ist. Daher ist es möglich, dass ein Dieb ein von ihm gestohlenes mobiles Endgerät, welches für eine bargeldlose Bezahlung eingerichtet ist, für Bezahlvorgänge einsetzt. Bei Mobilfunkgeräten besteht die Möglichkeit einer Authentifizierung einer das Gerät nutzenden Person durch eine der SIM-Karte des Geräts zugeordnete PIN. Die Geräte sind dabei so ausgebildet, dass ihr Inhaber eine Benutzung durch Fremde insoweit ausschließen kann, als er durch entsprechende Konfigurationseinstellungen eine Aktivierung des Endgeräts aus dem Standby-Zustand nur nach Eingabe dieser PIN ermöglicht. Allerdings wird diese Möglichkeit von vielen Inhabern mobiler Endgeräte aus Bequemlichkeitsgründen häufig nicht genutzt. Somit hat ein Dieb nach dem Einschalten eines mobilen Endgeräts häufig ohne PIN-Abfrage Zugang zu allen Gerätefunktionen, gegebenenfalls auch zur Verwendung des Endgeräts für bargeldlose Bezahlvorgänge. Sofern der Inhaber eines mobilen Endgeräts dessen Benutzung durch das Erfordernis der Eingabe einer PIN beschränkt, ist dies für ihn mit dem Nachteil verbunden, dass ihm möglicherweise diese PIN, gerade wenn er einen bargeldlosen Bezahlvorgang veranlassen will, nicht einfällt.

Daher erscheint die Verwendung anderer Authentifikationsverfahren, welche einerseits eine sehr sichere Authentifikation des Käufers ermöglichen und andererseits für diesen dennoch komfortabel durchzuführen sind, vorteilhaft. In der Vergangenheit hat sich insoweit die Verwendung biometrischer Daten, wie insbesondere auf der Grundlage der Stimm- beziehungsweise der Sprechererkennung, der Gesichtserkennung oder der Erkennung von Fingerabdrücken als vorteilhaft erwiesen. So wird beispielsweise im Zusammenhang mit der Autorisierung von Finanztransaktionen durch die WO2010/066 277 A1 der Einsatz der Sprechererkennung zur Autorisierung an zentraler Stelle, nämlich an einem zentralen Server, beschrieben.

Ferner beschreibt die EP 2 065 798 A1 ein mobiles Bezahlverfahren, bei dem sich der Nutzer über biometrische Daten authentifiziert. Gemäß der Schrift erfolgt der gesamte Authentifizierungsprozess über ein mobiles Netzwerk, über welches zu diesem Zweck Authentifizierungszertifikate versendet werden. Das Verfahren ist insoweit verhältnismäßig aufwändig.

Aufgabe der Erfindung ist es, eine alternative Lösung zur Durchführung bargeldloser Bezahlvorgänge bereitzustellen, welche eine sichere Bezahlung unter Verwendung eines mobilen Endgeräts für die Autorisierung eines entsprechenden Bezahlvorgangs ermöglicht. Dazu sind ein System und ein Verfahren anzugeben.

Die Aufgabe wird durch ein System mit den Merkmalen des Patentanspruchs 1 gelöst. Ein die Aufgabe lösendes Verfahren ist durch den ersten Verfahrensanspruch charakterisiert. Vorteilhafte Aus- beziehungsweise Weiterbildungen der Erfindung sind durch die Unteransprüche gegeben.

Das zur Lösung der Aufgabe vorgeschlagene System zur Durchführung eines bargeldlosen Bezahlvorgangs umfasst als Basiskomponenten ein zur Autorisierung des Bezahlvorgangs zu verwendendes mobiles Endgerät eines Käufers, eine elektronische Kasseneinrichtung eines Verkäufers und mindestens eine computerbasierte Backendeinrichtung eines Zahlungsdienstleisters. Es handelt sich insoweit streng genommen um ein jeweils im Zusammenhang mit einem Bezahlvorgang temporär bestehendes System. Selbstverständlich gehören nämlich globaler betrachtet mehrere mobile Endgeräte unterschiedlicher Käufer sowie vorzugsweise mehrere elektronische Kasseneinrichtungen eines oder mehrerer Verkäufer zu einem entsprechenden System, wobei eben, betrachtet auf den einzelnen bargeldlosen Bezahlvorgang, jeweils ein mobiles Endgerät eines Käufers, eine elektronische Kasseneinrichtung eines Verkäufers und die bereits genannte Backendeinrichtung oder die Backendeinrichtungen eines Zahlungsdienstleisters das System zur Durchführung dieses konkreten Bezahlvorgangs ausbilden. Wie bei vergleichbaren Systemen üblich, werden dabei durch die Backendeinrichtungen die mit dem Bezahlvorgang verbundenen finanziellen Transaktionen, nämlich die Belastung eines mit dem für den Bezahlvorgang verwendeten Zahlungsmittel - vorliegend mit dem mobilen Endgerät des Käufers beziehungsweise mit einer darauf virtualisierten Kreditkarte - assoziierten Kontos mit dem Kaufbetrag und die Gutschrift eines entsprechenden Betrages auf einem Konto des Verkäufers, abgewickelt. Zwischen dem mobilen Endgerät des Käufers und der Kasseneinrichtung des Verkäufers besteht bei der Durchführung des Bezahlvorgangs zumindest einmalig eine temporäre Datenverbindung.

Das zur Lösung der Aufgabe vorgeschlagene System weist mindestens eine primäre und eine sekundäre Überprüfungsdomäne für einen Vergleich bei der Autorisierung des Bezahlvorgangs an dem mobilen Endgerät erfasster biometrischer Daten des Käufers mit biometrischen Referenzdaten auf. Hierbei sind die primäre Überprüfungsdomäne durch das mobile Endgerät des Käufers und die sekundäre Überprüfungsdomäne durch eine der anderen, vorstehend genannten Basiskomponenten des Systems gebildet. Jede Überprüfungsdomäne besteht aus mindestens einer Verarbeitungseinheit und Speichermitteln mit Anwendungs-und Programmdaten zur Anwendung mindestens eines biometrischen Referenzmodells auf die miteinander zu vergleichenden Daten. Biometrische Referenzdaten sind dabei mindestens in Speichermitteln der primären Überprüfungsdomäne, also des mobilen Endgeräts des Käufers, gespeichert. Das System ist derart ausgebildet und konfiguriert, dass bei jedem Bezahlvorgang zumindest die primäre Überprüfungsdomäne aktiv ist. Wann und unter welchen Bedingungen nur die eine oder gegebenenfalls außerdem die andere Überprüfungsdomäne für einen Vergleich der mittels des mobilen Endgeräts des Käufers erfassten biometrischen Daten mit den biometrischen Referenzdaten zum Einsatz gelangt, ist Gegenstand des der Erfindung zugrunde liegenden Verfahrens und soll bei dessen Darstellung beziehungsweise im Zusammenhang mit den Ausführungsbeispielen noch näher erläutert werden.

Wie bereits ausgeführt, sind biometrische Referenzdaten zumindest in Speichermitteln des mobilen Endgeräts des Käufers gespeichert. Bei diesen Speichermitteln kann es sich um eine durch das mobile Endgerät aufgenommene oder in dieses eingefügte Chipkarte zur Identifizierung des Käufers gegenüber einem Mobilfunkbetreiber, das heißt insbesondere um eine SIM-Karte, handeln. Neben der SIM-Karte kommen zudem eine USIM-Karte (Universal Subscriber Identity Module) oder eine UICC (Universal Integrated Circuit Card) in Betracht. Gemäß einer bevorzugten Ausbildungsform der Erfindung ist die sekundäre Überprüfungsdomäne durch Backendeinrichtungen oder eine der Backendeinrichtungen des Zahlungsdienstleisters gebildet. Hierbei können die biometrischen Referenzdaten, wie auch noch bei der Darstellung des Verfahrens zu erläutern sein wird, für den durch die Backendeinrichtung oder Backendeinrichtungen durchzuführenden Vergleich zunächst durch das mobile Endgerät des Käufers an diese übertragen werden oder aber, entsprechend einer bevorzugten Ausbildungsform des Systems, in einer Datenbank gehalten werden, die in Speichermitteln der sekundären Überprüfungsdomäne selbst gespeichert ist. Im letztgenannten Falle werden demnach biometrische Referenzdaten sowohl in Speichermitteln des mobilen Endgeräts als auch in einer Datenbank der zweiten Überprüfungsdomäne gehalten, wobei die einerseits in dem mobilen Endgerät und andererseits in der Datenbank der zweiten Überprüfungsdomäne gehaltenen Referenzdaten nicht dieselben und auch nicht gleicher Art sein müssen. Auch hierzu sollen später noch nähere Ausführungen erfolgen.

Entsprechend einer bevorzugten Weiterbildung des erfindungsgemäßen Systems wird durch das mobile Endgerät des Käufers, in Form von Programm- und Anwendungsdaten, mindestens ein virtuelles Zahlungsmittel, wie beispielsweise eine Mobile Wallet, das heißt eine virtualisierte Geldkarte beziehungsweise Kreditkarte verwaltet und zur Verwendung für bargeldlose Bezahlvorgänge bereitgestellt. Die durch die vorgenannten Anwendungs- und Programmdaten repräsentierte, von der Verarbeitungseinheit des mobilen Endgeräts zum Vergleich der erfassten biometrischen Daten mit den biometrischen Referenzdaten verarbeitete Programmanwendung fungiert dabei beispielsweise als ein Plug-In für eine oder mehrere andere Programmanwendungen zur Verwaltung solcher virtuellen Zahlungsmittel, wie Mobile Wallets, oder interagiert mit diesen über entsprechende Softwareschnittstellen. Die konkrete Ausbildung und Realisierung der Mobile Wallets oder anderer virtueller Zahlungsmittel und deren Zusammenwirken mit der Programmanwendung für die Authentifikation sind dabei jedoch nicht Gegenstand der vorliegenden Erfindung.

Bei der eingangs im Zusammenhang mit der Darstellung des Systems angesprochenen, temporär während des Bezahlvorgangs zwischen dem mobilen Endgerät des Käufers und der Kasseneinrichtung bestehenden Verbindung handelt es sich vorzugsweise um eine Funkverbindung. Darüber hinaus kommen aber auch eine optische Verbindung oder sogar eine leitungsgebundene Verbindung in Betracht, wobei die letztgenannte Möglichkeit im Grunde nicht praxisrelevant ist. Besonders bevorzugt ist es, wenn es sich bei der temporär zwischen dem mobilen Endgerät des Käufers und der Kasseneinrichtung des Verkäufers bestehenden Verbindung um eine NFC-Verbindung, nämlich um eine Funkverbindung für die Nahbereichskommunikation (NFC = Near Field Communication = Nahbereichskommunikation) handelt.

Grundlage für das die Aufgabe lösende Verfahren zur Durchführung eines bargeldlosen Bezahlvorgangs bildet das zuvor beschriebene Bezahlsystem, dessen Basiskomponenten, wie bereits ausgeführt, durch ein mobiles Endgerät eines Käufers, eine elektronische Kasseneinrichtung eines Verkäufers und mindestens eine computerbasierte Backendeinrichtung eines Zahlungsdienstleisters gebildet sind. Entsprechend dem Verfahren wird der Bezahlvorgang durch den Käufer mittels des von ihm mitgeführten mobilen Endgeräts gegenüber der Kasseneinrichtung autorisiert, wobei sich der Käufer hierbei gegenüber dem System authentifiziert. Der Bezahlvorgang wird dabei selbstverständlich nur im Falle einer erfolgreichen Authentifizierung ausgeführt. Insoweit ist im Kontext der vorstehenden und nachfolgenden Ausführungen zur Erfindung zwischen der Durchführung des Bezahlvorgangs und dessen Ausführung zu unterscheiden. Die Durchführung des Bezahlvorgangs umfasst hierbei auch die zuvor angesprochene Authentifizierung, wohingegen die an die erfolgreiche Authentifizierung gebundene Ausführung die eigentliche Abwicklung des Bezahlvorgangs, inklusive der durch die Backendeinrichtungen des Zahlungsdienstleisters durchzuführenden Transaktionen betrifft.

Gemäß dem vorgeschlagenen Verfahren erfolgt die Authentifizierung des Käufers mittels an dem mobilen Endgerät erfasster biometrischer Daten, welche auf der Grundlage mindestens eines Referenzmodells mit zu einem früheren Zeitpunkt erfassten biometrischen Referenzdaten verglichen werden, die eine zur Verwendung des betreffenden mobilen Endgeräts für bargeldlose Bezahlvorgänge berechtigte Person identifizieren. Entsprechende biometrische Referenzdaten sind dabei zumindest in Speichermitteln des Endgeräts abgelegt. Ein zur Authentifizierung durchzuführender Vergleich zwischen den mittels des mobilen Endgeräts erfassten biometrischen Daten und den biometrischen Referenzdaten erfolgt erfindungsgemäß zumindest durch eine von dem mobilen Endgerät verarbeitete Programmanwendung. Jedoch wird im Falle dessen, dass ein von dieser Programmanwendung bei der Durchführung des Vergleichs für das Bestehen einer Übereinstimmung der miteinander verglichenen biometrischen Daten ermittelter Vertrauenswert, das heißt der Konfidenzwert, nicht oberhalb eines festgelegten ersten Mindestwertes, aber zumindest innerhalb eines zwischen diesem ersten Mindestwert und einem weiteren, geringeren Mindestwert gegebenen Vertrauensintervalls liegt, von der betreffenden Programmanwendung ein weiterer Vergleich am Endgerät erfasster biometrischer Daten mit biometrischen Referenzdaten durch eine von einer der anderen Basiskomponenten des Bezahlsystems verarbeitete Programmanwendung veranlasst. Dabei müssen jedoch diesem zweiten Vergleich zugrunde gelegten, mittels des mobilen Endgeräts erfassten biometrischen nicht zwingend dieselben sein wie bei dem ersten Vergleich, wobei folglich entsprechendes auch für die Referenzdaten gilt. Vielmehr können im Falle eines zweiten der Erhöhung der Vertrauenswürdigkeit dienenden Vergleichs nach entsprechender Aufforderung des das mobile Endgerät für die Bezahlung verwendenden Nutzers nochmals biometrische Daten des Nutzers, gegebenenfalls auch anderer Form beziehungsweise anderer Art, erfasst werden. In jedem Falle ist aber davon auszugehen, dass zur Erhöhung der Zuverlässigkeit der Authentizität des betreffenden Nutzers für den zweiten Vergleich ein aufwendigeres beziehungsweise komplexeres Referenzmodell zum Einsatz gelangt.

An dieser Stelle sei darauf hingewiesen, dass die vorstehend genannte Übereinstimmung zwischen den miteinander verglichenen Daten sich nicht zwingend auf eine unmittelbare tatsächliche Übereinstimmung der biometrischen Daten selbst bezieht, sondern vielmehr darauf, dass eine (vermeintliche) Übereinstimmung zwischen der Person, für welche die biometrischen Referenzdaten hinterlegt wurden und der Person besteht, deren biometrische Daten mittels des mobilen Endgeräts bei der Autorisierung des Bezahlvorgangs erfasst werden. Dieses Verständnis gilt auch im Kontext der Patentansprüche, in denen aus Gründen der sprachlichen Vereinfachung ebenfalls von einer Übereinstimmung der miteinander verglichenen Daten gesprochen wird. Zudem besteht eine entsprechende Übereinstimmung im Hinblick darauf, dass der Konfidenzwert in der Praxis kaum jemals 100 % erreichen wird beziehungsweise für das Ergebnis des Vergleichs im Grunde immer eine gewisse, von Null verschiedene Fehlerwahrscheinlichkeit gegeben ist, im Allgemeinen nur potenziell beziehungsweise vermeintlich.

Wie den Ansprüchen zum Verfahren zu entnehmen ist, kann anstelle der Konfidenz, also des Vertrauenswertes, für die Bewertung des Ergebnisses des durchgeführten Vergleichs und der dabei festgestellten vermeintlichen Übereinstimmung auch die Fehlerwahrscheinlichkeit herangezogen werden. Da diese ein Maß dafür ist, mit welchem Fehler eine die Übereinstimmung der verglichenen Daten (beziehungsweise der durch sie charakterisierten Personen) feststellende Aussage behaftet ist, ist hierbei eine entsprechende Aussage umso zuverlässiger, je geringer diese Fehlerwahrscheinlichkeit ist. Folglich ist bei der Entscheidung darüber, ob nach einem ersten durch das mobile Endgerät durchgeführten Vergleich ein weiterer Vergleich durch eine der anderen Basiskomponenten erfolgen soll, darauf abzustellen, ob diese Fehlerwahrscheinlichkeit einen bestimmten festgelegten Wert überschreitet. Überschreitet die Fehlerwahrscheinlichkeit einen ebenfalls festgelegten absoluten Maximalwert, ist dies gleichbedeutend damit, dass zwischen den Daten (genauer gesagt, zwischen der sich authentifizierenden Person und der Person, von welcher die Referenzdaten stammen) keine Übereinstimmung besteht und die Autorisierung des Kaufvorgangs wird abgelehnt. Ist zwar die Fehlerwahrscheinlichkeit bei dem durch das mobile Endgerät durchgeführten Vergleich gleich oder größer als ein festgelegter zulässiger Höchstwert, überschreitet jedoch nicht den zuvor genannten absoluten Maximalwert und liegt mithin innerhalb eines zwischen dem zulässigen Höchstwert und dem absoluten Maximalwert definierten Zulässigkeitsintervalls, wird ein nochmaliger Vergleich durch eine der anderen Basiskomponenten des Systems durchgeführt. Ist hingegen die Fehlerwahrscheinlichkeit des durch das mobile Endgerät durchgeführten Vergleichs geringer als der zulässige Höchstwert, so kann mit hinreichender Wahrscheinlichkeit davon ausgegangen werden, dass eine durch die Programmanwendung des mobilen Endgeräts festgestellte Übereinstimmung der Daten (Personen) auch tatsächlich besteht, so dass der Kaufvorgang bereits nach diesem einen lediglich durch das mobile Endgerät durchgeführten Vergleich autorisiert wird. Beispielsweise kann insoweit festgelegt sein, dass die seitens des Benutzers des mobilen Endgeräts beabsichtigte Autorisierung eines Bezahlvorgangs unmittelbar abgelehnt wird, wenn die Fehlerwahrscheinlichkeit für eine vermeintliche Übereinstimmung der miteinander verglichenen Daten größer ist als ein absoluter Maximalwert von 20 %. Liegt die Fehlerwahrscheinlichkeit gemäß diesem Beispiel zwar nicht oberhalb dieses Maximalwertes aber beispielsweise oberhalb eines als zulässig angesehenen Höchstwertes von 10 %, erfolgt hingegen ein nochmaliger Vergleich der bei der beabsichtigten Autorisierung des Bezahlvorgangs an dem mobilen Endgerät erfassten Daten biometrischen Daten durch eine der anderen Basiskomponenten des Systems, also beispielsweise durch die Backendeinrichtungen des Zahlungsdienstleisters.

Die zuvor dargestellte Vorgehensweise kann aber auch ferner noch davon abhängig gemacht werden, dass der dem Bezahlvorgang zugrunde liegende Bezahlbetrag über einem festgelegten, in dem mobilen Endgerät gespeicherten Höchstbetrag liegt. Im letztgenannten Fall erfolgt also bei ungenügender aber zumindest noch innerhalb des zuvor genannten Vertrauensintervalls gelegener Konfidenz des durch das mobile Endgerät des Käufers ausgeführten Vergleichs nur dann ein weiterer Vergleich durch eine der anderen Basiskomponenten des Bezahlsystems, wenn der zugrunde liegende Bezahlbetrag außerdem einen gewissermaßen als "Bagatellgrenze" zu bezeichnenden Höchstwert überschreitet. Dies heißt selbstverständlich nicht, dass Bezahlvorgängen, welchen ein Bezahlbetrag unterhalb des vorstehend genannten Höchstbetrages zugrunde liegt, in jedem Falle ausgeführt werden. Vielmehr muss auch für mindere Beträge betreffende Bezahlvorgänge im Ergebnis des durch das mobile Endgerät durchgeführten Vergleichs wenigstens ein minimaler, innerhalb des schon mehrfach genannten Vertrauensinterfalls gelegener beziehungsweise dessen untere Grenze bildender Konfidenzwert vorliegen, so dass die Authentifizierung als erfolgreich angesehen und der Bezahlvorgang ausgeführt werden kann. Auch hierbei kann selbstverständlich bei der Bewertung eines eine Übereinstimmung zwischen den am mobilen Endgerät erfassten biometrischen Daten und biometrischen Referenzdaten feststellenden Vergleichs anstelle des Konfidenzwertes die Fehlerwahrscheinlichkeit herangezogen werden.

Entsprechend einer konkreten praktischen, die Festlegung einer Bagatellgrenze für den Bezahlbetrag außer Betracht lassenden Umsetzung des erfindungsgemäßen Verfahrens gestaltet sich dessen Ablauf in der Weise, dass
a) der Bezahlvorgang ausgeführt wird, sofern der für eine Identität der verglichenen biometrischen Daten von der Programmanwendung des mobilen Endgeräts ermittelte Konfidenzwert einen ersten Mindestwert überschreitet,
b) eine Durchführung des Bezahlvorgangs abgelehnt wird, sofern der für eine Identität der verglichenen biometrischen Daten von der Programmanwendung des mobilen Endgeräts ermittelte Konfidenzwert einen gegenüber dem ersten Mindestwert gemäß a) niedrigeren zweiten Mindestwert unterschreitet,
c) sofern der von der Programmanwendung des mobilen Endgeräts für die Identität der verglichenen Daten ermittelte Konfidenzwert gleich dem oder niedriger ist als der erste Mindestwert gemäß a), aber wenigstens so hoch wie der zweite Mindestwert gemäß b), ein Vergleich der mittels des mobilen Endgeräts erfassten biometrischen Daten mit biometrischen Referenzdaten durch eine von einer anderen Basiskomponente des Systems auf der Grundlage eines gegenüber dem ersten von dem mobilen Endgerät verwendeten Referenzmodell aufwendigeren, zweiten Referenzmodells ausgeführte Programmanwendung erfolgt.

Überschreitet der, für eine potenziell bestehende Identität der verglichenen biometrischen Daten und damit der für die Authentizität des das mobile Endgerät für den Bezahlvorgang verwendenden Nutzers im Zuge des zweiten Vergleichs ermittelte Konfidenzwert einen hierfür festgelegten Mindestwert, so wird der Bezahlvorgang schließlich ausgeführt, wohingegen die Ausführung andernfalls verweigert wird. Der zuvor skizzierte Ablauf würde sich in entsprechender Weise bei der Berücksichtigung einer Bagatellgrenze für den Bezahlbetrag und/oder bei Verwendung der Fehlerwahrscheinlichkeit anstelle des Konfidenzwertes für die Bewertung des eine vermeintliche Übereinstimmung der Daten feststellenden Vergleichs vollziehen.

In Abhängigkeit der für den Vergleich verwendeten biometrischen Daten, bei denen es sich beispielsweise um akustische Daten der Stimme des Käufers (so genannte Voice Prints), um mittels einer Kamera gemachte Aufnahmen des Gesichts des Käufers oder aber auch um einen oder mehrere Fingerabdrücke handeln kann, sowie in Abhängigkeit des jeweils für den Vergleich zugrunde gelegten Referenzmodells, kommt für den vorgenannten ersten, die Konfidenz betreffenden Mindestwert, beispielsweise ein Wert von 90 %, das heißt eine zu 90 % bestehende Übereinstimmung zwischen den erfassten biometrischen Daten und den biometrischen Referenzdaten, in Betracht. Für den zweiten, demgegenüber niedrigeren Mindestwert erscheint dabei ein, für eine mit 80 %iger Wahrscheinlichkeit bestehende Identität stehender Konfidenzwert als zweckmäßig. Demgemäß würde im Falle dessen, dass bei dem ersten durch das mobile Endgerät vorgenommenen Vergleich zwischen den von ihm erfassten biometrischen Daten und den in seinen Speichermitteln abgelegten biometrischen Referenzdaten eine mit mehr als 90 %iger Wahrscheinlichkeit bestehende Identität ermittelt wird, der hierdurch autorisierte Bezahlvorgang unmittelbar ausgeführt werden. Besteht hingegen eine Identität zwischen den verglichenen Daten lediglich mit einer Wahrscheinlichkeit von unter 80 % würde die Ausführung des Bezahlvorgangs verweigert werden. Im Falle eines Konfidenzwerts, gemäß welchem eine Identität zwischen den verglichenen Daten mit einer zwischen 80 % und 90 % liegenden Wahrscheinlichkeit besteht, würde durch die auf dem mobilen Endgerät ausgeführte Programmanwendung ein weiterer Vergleich zwischen den erfassten biometrischen Daten und Referenzdaten durch eine der anderen Basiskomponenten des Bezahlsystems veranlasst werden.

Bei den dem zweiten Vergleich zugrunde gelegten biometrischen Referenzdaten kann es sich um Referenzdaten handeln, welche im Zusammenhang mit der Veranlassung eines weiteren Vergleichsvorgang von der Programmanwendung des mobilen Endgeräts an die den zweiten Vergleich durchführende Basiskomponente übermittelt werden. Vorzugweise können jedoch entsprechende biometrische Referenzdaten auch in Speichermitteln der zweiten Basiskomponente selbst, das heißt vorzugsweise in der oder den Backendeinrichtungen des Zahlungsdienstleisters, abgespeichert sein. Gegebenenfalls kann dabei, wie bereits ausgeführt, auch die Art der miteinander verglichenen biometrischen Daten bei den beiden Vergleichsvorgängen voneinander abweichen. Das heißt, dass es denkbar ist, dass beispielsweise im Zuge des ersten durch das mobile Endgerät ausgeführten Vergleichs Stimmdaten (Voice Print) als biometrische Daten miteinander verglichen werden, wohingegen in dem zweiten Vergleich möglicherweise Bilddaten zum Gesicht des Käufers miteinander verglichen werden. Selbstverständlich muss in einem solchen Falle der Käufer nach der ersten, nicht vollends erfolgreichen Authentifizierung durch das mobile Endgerät darauf hingewiesen werden, dass nun nochmals andere Referenzdaten - gemäß dem zuvor dargestellten Beispiel mittels einer Kamera des mobilen Endgeräts - von ihm erfasst werden müssen.

Aus der Literatur sind für den Vergleich biometrischer Daten unterschiedlich komplexe Referenzmodelle bekannt. Ein eher hochkomplexes Referenzmodell, dessen Anwendung besonders leistungsfähige rechentechnischen Ressourcen erfordert und daher vorzugsweise im Rahmen des zweiten, beispielsweise durch die Backendeinrichtungen durchgeführten Vergleichs erfolgt, basiert beispielsweise auf der Verwendung von Hidden Markov Modellen (HMM).

Eine Differenzierung zwischen einem ersten durch das mobile Endgerät vorgenommenen Vergleich der am Endgerät erfassten biometrischen Daten mit biometrischen Referenzdaten und einem nachfolgenden nochmaligen Vergleich entsprechender Daten durch eine der anderen Basiskomponenten kann auch durch die Art der Aufbereitung beziehungsweise Abspeicherung der für den Vergleich herangezogenen biometrischen Referenzdaten gegeben sein. So ist es entsprechend einer möglichen Gestaltung des erfindungsgemäßen Verfahrens vorgesehen, dass die für den Vergleich herangezogenen biometrischen Referenzdaten auf dem mobilen Endgerät im Hinblick auf den begrenzten Speicherplatz in dessen Speichermitteln in komprimierter Form abgelegt werden. Bei komplexen biometrischen Daten ist dabei eine entsprechende Komprimierung im Allgemeinen verlustbehaftet. Dies kann jedoch zur Folge haben, dass das beim Vergleich der Daten durch das mobile Endgerät ermittelte Ergebnis eher mit einer gewissen Unsicherheit behaftet ist, so dass bei einem eventuellen Hinzukommen anderer die Sicherheit des Vergleichsergebnisses, also dessen Konfidenz oder Fehlerwahrscheinlichkeit beeinflussender Faktoren im Einzelfalle ein Vergleichsergebnis erhalten werden kann, welches gewissermaßen vorsorglich, durch einen weiteren Vergleich nochmals abgesichert werden muss. Ein solcher weiterer, gemäß dem Grundprinzip der Erfindung durch eine der anderen Basiskomponenten durchzuführender Vergleich wird bei der an dieser Stelle erläuterten Verfahrensgestaltung, abweichend von dem ersten Vergleich unter Heranziehung nicht komprimierter, in einer Datenbank der betreffenden anderen Basiskomponente gehaltener biometrischer Referenzdaten durchgeführt. Aufgrund der Verwendung unkomprimierter Referenzdaten erhöht sich dabei die Zuverlässigkeit des im Zuge dieses weiteren Vergleichs erhaltenen Ergebnisses.

Je nach Ausbildung des Verfahrens kann es vorgesehen sein, dass die in dem mobilen Endgerät des Käufers hinterlegten biometrischen Referenzdaten durch den Inhaber des mobilen Endgeräts, selbstverständlich unter der Voraussetzung der Erfüllung besonderer Sicherheitskriterien, veränderbar sind. So ist es beispielsweise denkbar, dass der Inhaber eines Mobiltelefons beziehungsweise eines Smartphones die auf diesem gespeicherten biometrischen Referenzdaten zu seiner Person nach Eingabe der so genannten PUK (Personal Unblocking Key) verändern kann.

Zwei einander ähnliche Ausführungsbeispiele für das erfindungsgemäße System und die sich bei deren Verwendung für einen bargeldlosen Bezahlvorgang vollziehenden Abläufe sollen nachfolgend anhand von Zeichnungen erläutert werden. Im Einzelnen zeigen:
- Fig. 1:: eine erste mögliche Ausbildungsform des erfindungsgemäßen Systems,
- Fig. 2:: eine geringfügig modifizierte Variante des Systems nach Fig. 1.

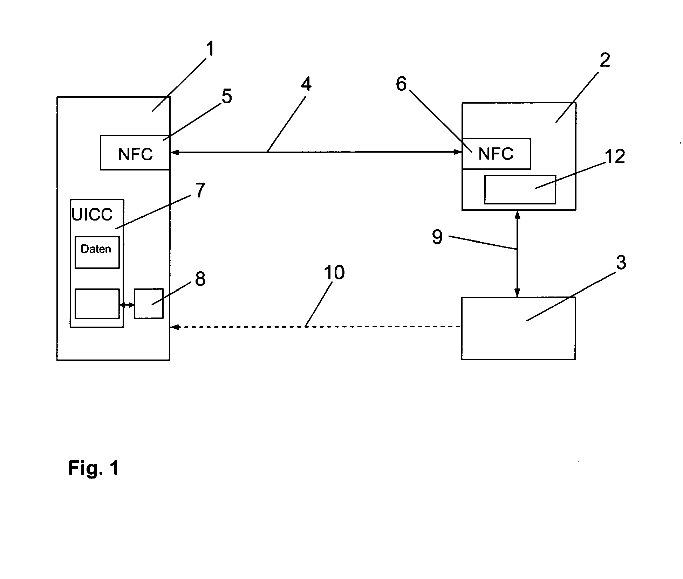

Die Fig. 1 zeigt eine erste mögliche Ausbildungsform des erfindungsgemäßen Systems zur Durchführung eines bargeldlosen Bezahlvorgangs. Das dargestellte System besteht im Wesentlichen aus den Basiskomponenten, welche durch ein mobiles Endgerät 1 eines Käufers, eine elektronische Kasseneinrichtung 2 eines Verkäufers und computerbasierten Backendeinrichtungen 3 eines Zahlungsdienstleisters gegeben sind. Bei dem mobilen Endgerät 1 des Käufers handelt es sich beispielsweise um ein Smartphone, welches von dem Käufer zur Autorisierung des bargeldlosen Bezahlvorgangs verwendet wird. In Bezug auf die im Zusammenhang mit der Darstellung des erfindungsgemäßen Systems beziehungsweise des Verfahrens zur Durchführung eines bargeldlosen Bezahlvorgangs zu betrachtenden Merkmale und Funktionalitäten weist dieses Smartphone eine Sende- und Empfangseinheit 5 für die Nahbereichskommunikation per Funk (NFC), eine (nicht näher dargestellte) Verarbeitungseinheit und Speichermittel 7 auf, in welchen die biometrischen Referenzdaten gehalten werden. Bei letzteren handelt es sich gemäß dem Beispiel um eine UICC, das heißt eine für die Verwendung des Smartphones in einem Mobilfunknetz erforderliche SIM-Karte mit einer erweiterten Funktionalität. Die Kasseneinrichtung 2 des Verkäufers umfasst einen Kassentransponder, das heißt ebenfalls eine Sende- und Empfangseinheit 6 für die Nahbereichskommunikation (NFC), eine (ebenfalls nicht gezeigte) Verarbeitungseinheit und eine von dieser verarbeitete Kassensoftware 12. Die Kasseneinrichtung verfügt über eine drahtgebundene oder eine funkgestützte Verbindung 9 zu computerbasierten Backendeinrichtungen 3 eines Zahlungsdienstleisters, durch welche der eigentliche, nach erfolgreicher Authentifizierung des Käufers ausgeführte Bezahlvorgang abgewickelt wird.

Bei der Durchführung eines bargeldlosen Bezahlvorgangs unter Verwendung des dargestellten Systems vollzieht sich folgender Ablauf. Nachdem der das mobile Endgerät 1 bei sich führende Käufer beziehungsweise Kunde von dem Verkäufer beziehungsweise Kassierer zur Bezahlung eines von ihm erworbenen Produkts oder einer Dienstleistung aufgefordert wurde, bringt der Käufer sein mobiles Endgerät, das heißt das Smartphone, in den Nahbereich des Kassentransponders, das heißt der Sende- und Empfangseinheit 6. Daraufhin wird zwischen dem mobilen Endgerät 1 und der Kasseneinrichtung 2 eine drahtlose NFC-Verbindung 4 aufgebaut. Über diese Verbindung 4 werden durch die aktivierte Kassensoftware 12 der Kasseneinrichtung 2 Daten zum Verkaufsgegenstand und insbesondere zu dem zu begleichenden Bezahlbetrag zusammen mit einer Zahlungsaufforderung an das mobile Endgerät 1 des Käufers übertragen. Hierdurch wird eine entsprechende, durch die Verarbeitungseinheit des Smartphones zu verarbeitende Programmanwendung 8 zur Nutzung des Smartphones für die bargeldlose Bezahlung gestartet. Durch die entsprechende Programmanwendung 8 wird der Käufer über das Display des Geräts gegebenenfalls dazu aufgefordert, eine von dem mobilen Endgerät 1 gehaltene virtuelle Kreditkarte für die Begleichung des angeforderten Bezahlvorgangs auszuwählen. In Abhängigkeit der Höhe des Kaufbetrages kann es gegebenenfalls ausnahmsweise auch ausreichend sein, wenn der Käufer eine der virtuellen Kreditkarten auswählt, um den bargeldlosen Bezahlvorgang einzuleiten. Insoweit kann es auch vorgesehen sein, dass bei sehr geringfügigen Beträgen in Höhe weniger Euro der Bezahlvorgang abläuft, ohne dass sich der Käufer hierzu in spezieller Weise authentifizieren muss. Vielmehr reicht in einem solchen Fall zur Autorisierung eines Bezahlvorgangs die Auswahl einer elektronischen beziehungsweise virtuellen Kreditkarte aus.

Im Allgemeinen wird sich jedoch der Käufer, insbesondere dann, wenn der Bezahlbetrag das festgelegte absolute Limit übersteigt, zur Autorisierung des Bezahlvorgangs zusätzlich gegenüber dem System an dem mobilen Endgerät 1 authentifizieren müssen. Diese geschieht im Sinne des Verfahrens durch die Erfassung biometrischer Daten des Käufers an dem mobilen Endgerät 1. Dabei muss der Käufer beispielsweise zur Abgabe einer Stimmprobe, vorzugsweise ein festgelegtes Kommando oder eine bestimmte Sprachsequenz, in das Mikrofon des mobilen Endgeräts 1 sprechen. Der hierbei erfasste, so genannte Voice Print des Käufers wird daraufhin mit in den Speichermitteln 7, also der UICC, des mobilen Endgeräts 1 abgelegten biometrischen Referenzdaten verglichen, durch welche ebenfalls ein solcher Voice Print beschrieben wird. Durch den Vergleich wird ermittelt, ob davon auszugehen ist, dass es sich bei dem Käufer, welcher sich mittels der abgegebenen Stimmprobe authentifiziert, um die Person handelt, die sich zu einem früheren Zeitpunkt als zur Durchführung bargeldloser Bezahlvorgänge mittels des Endgeräts 1 berechtigte Person durch Abspeicherung akustischer biometrischer Referenzdaten identifiziert hat.

Durch die (nicht gezeigte) Verarbeitungseinheit des mobilen Endgeräts 1 beziehungsweise durch die von dieser verarbeitete Programmanwendung 8 wird dabei auf der Grundlage eines für den Vergleich verwendeten Referenzmodells ein Konfidenzwert ermittelt, welcher ein Maß für die Wahrscheinlichkeit der gegebenenfalls festgestellten Übereinstimmung zwischen den gerade erfassten biometrischen Daten und den biometrischen Referenzdaten bildet. Sofern dieser Konfidenzwert über einem ersten festgelegten, ebenfalls in dem mobilen Endgerät 1 gespeicherten ersten Mindestwert liegt, wird von einer erfolgreichen Authentifizierung ausgegangen und der eigentlichen Bezahlvorgang unter Einbeziehung der Kasseneinrichtung 2 und der Backendeinrichtungen 3 ausgeführt. Liegt jedoch der Konfidenzwert unterhalb eines zweiten, ebenfalls in dem mobilen Endgerät 1 gespeicherten Mindestwertes für die Konfidenz, so wird der Authentifizierungsvorgang als gescheitert bewertet und die Ausführung des Bezahlvorgangs verweigert.

Eine Besonderheit der erfindungsgemäßen Lösung ergibt sich für den Fall, dass der bei dem Vergleich ermittelte Konfidenzwert in dem Intervall zwischen den beiden zuvor genannten Mindestwerten liegt. In diesem Fall wird davon ausgegangen, dass es sich bei der das mobile Endgerät 1 verwendenden, den Bezahlvorgang autorisierenden Person möglicherweise um die dazu berechtigte Person handelt, hierüber jedoch im Zuge des ersten durchgeführten Vergleichs keine ausreichende Sicherheit besteht. Daher wird auf Veranlassung der durch die Verarbeitungseinheit des mobilen Endgeräts 1 verarbeiteten Programmanwendung 8, gegebenenfalls in Abhängigkeit davon, dass der Bezahlbetrag eine Bagatellgrenze überschreitet (die Bagatellgrenze liegt dabei oberhalb des absoluten Limits, bei dessen Unterschreitung gegebenenfalls ausnahmsweise keinerlei Authentifizierung erfolgt), ein weiterer Vergleich zwischen den erfassten biometrischen Daten und Referenzdaten einer zur Benutzung des mobilen Endgeräts 1 für die bargeldlosen Bezahlung berechtigten Person durchgeführt.

Dieser zweite Vergleich erfolgt auf der Grundlage eines komplexeren Referenzmodells und wird im Hinblick auf die dazu erforderlichen rechentechnischen Ressourcen durch die insoweit leistungsfähigeren Einrichtungen des Backendsystems, also die Backendeinrichtungen 3 durchgeführt. Hierzu werden die bereits erfassten biometrischen Daten und/oder gegebenenfalls weitere nach entsprechender Aufforderung des Käufers erfasste biometrische Daten durch die Verarbeitungseinheit des mobilen Endgeräts 1 über dessen Sende- und Empfangseinheit 5 für die Nahfeldkommunikation sowie über die Kasseneinrichtung 2 und die von dieser zu den Backendeinrichtungen 3 bestehende Verbindung 9 an die Backendeinrichtungen 3 übertragen. Hier werden sie mit vorzugsweise in einer Datenbank der Backendeinrichtungen 3 des Zahlungsdienstleisters gehaltenen biometrischen Referenzdaten verglichen, welche zu einem früheren Zeitpunkt aufgrund eines zwischen der zur Verwendung des mobilen Endgeräts für bargeldlose Bezahlvorgänge berechtigten Person und dem Zahlungsdienstleister geschlossenen Vertrags erfasst wurden. Sofern bei diesem Vergleich ein für die Konfidenz festgelegter Mindestwert erreicht beziehungsweise überschritten wird, erfolgt schließlich die Ausführung des Bezahlvorgangs einschließlich dessen späterer eigentlicher monetärer Abwicklung durch die Einrichtungen des Backendsystems. Wird der für den zweiten Vergleich festgelegte minimale Konfidenzwert nicht erreicht, wird die Ausführung des Bezahlvorgangs verweigert. An die Kasseneinrichtung 2 des Verkäufers wird dazu durch die Backendeinrichtungen eine entsprechende Mitteilung übertragen. Gegebenenfalls wird auch die das mobile Endgerät zur Autorisierung des Bezahlvorgangs verwendende Person durch die Übertragung einer Nachricht an das mobile Endgerät 1 hierüber unterrichtet. Im letztgenannten Fall kann die Übertragung der entsprechenden Nachricht dabei, wie im Beispiel dargestellt, unmittelbar von den Backendeinrichtungen 3 über eine Mobilfunkverbindung 10 auf das mobile Endgerät 1 oder aber alternativ auch über die Kasseneinrichtung erfolgen.

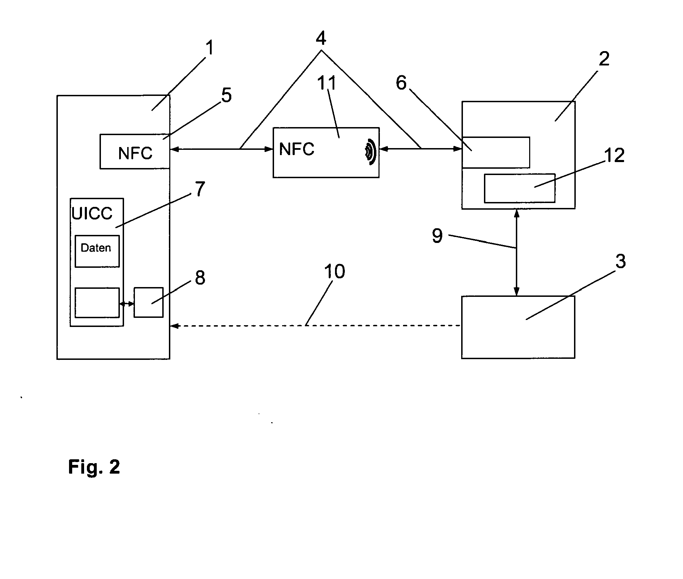

Bei dem in der Fig. 2 gezeigten Ausführungsbeispiel handelt es sich um eine geringfügig geänderte Variante des Bezahlsystems nach der Fig. 1. Der Unterschied besteht lediglich darin, dass bei dieser Ausbildungsform die Kasseneinrichtung 2 selbst nicht unmittelbar über eine Sende- und Empfangseinheit für die Nahfeldkommunikation, sondern nur über eine Sende- und Empfangseinheit 6 für Bluetooth verfügt. Die Kasseneinrichtung 2 ist daher gemäß dem gezeigten Ausführungsbeispiel um ein zusätzliches Modul 11 erweitert, bei welchem es sich um einen Konverter handelt, über welchen zwischen der Kasseneinrichtung 2 des Verkäufers und dem zusätzlichen Modul 11 eine Bluetooth-Funkverbindung und zwischen dem Modul 11 und dem Mobiltelefon beziehungsweise dem mobilen Endgerät 1 des Käufers eine NFC-Funkverbindung besteht. Durch den Konverter werden dabei lediglich die jeweils übertragenen Daten von Bluetooth auf NFC beziehungsweise von NFC auf Bluetooth umgesetzt. Die eigentlichen, die Erfindung betreffenden Abläufe, mittels welchen in Abhängig des Ergebnisses des durch die Verarbeitungseinrichtung des mobilen Endgeräts 1 durchgeführten Vergleichs zwischen erfassten biometrischen Daten des Käufers und biometrischen Referenzdaten gegebenenfalls ein weiterer Vergleich durch die Backendeinrichtungen 3 erfolgt, sind dabei dieselben wie zuvor beschrieben.

### Liste der Bezugszeichen

- 1: mobiles Endgerät
- 2: Kasseneinrichtung
- 3: Backendeinrichtung(en)
- 4: Verbindung
- 5: Sende- und Empfangseinheit des mobilen Endgeräts
- 6: Sende- und Empfangseinheit der Kasseneinrichtung
- 7: Speichermittel mit biometrischen Referenzdaten
- 8: Programmanwendung
- 9: Verbindung
- 10: Mobilfunkverbindung
- 11: Modul beziehungsweise Konverter

## Patentansprüche

1. System zur Durchführung eines bargeldlosen Bezahlvorgangs, dessen Basiskomponenten ein mobiles Endgerät (1) eines Käufers zur Autorisierung des Bezahlvorgangs, eine elektronische Kasseneinrichtung (2) eines Verkäufers und mindestens eine computerbasierte Backendeinrichtung (3) eines Zahlungsdienstleisters sind, wobei während der Autorisierung des Bezahlvorgangs über entsprechende Sende- und Empfangsmittel (5, 6) zumindest einmalig eine temporäre Datenverbindung (4) zwischen dem mobilen Endgerät (1) und der Kasseneinrichtung (2) besteht, **dadurch gekennzeichnet, dass** das System für einen Vergleich bei der Autorisierung des Bezahlvorgangs an dem mobilen Endgerät (1) erfasster biometrischer Daten des Käufers mit biometrischen Referenzdaten mindestens eine primäre Überprüfungsdomäne und eine sekundäre Überprüfungsdomäne aufweist und dass die primäre Überprüfungsdomäne durch das mobile Endgerät (1) des Käufers und die sekundäre Überprüfungsdomäne durch eine der anderen Basiskomponenten (2, 3) des Systems gebildet ist, wobei jede Überprüfungsdomäne aus mindestens einer Verarbeitungseinheit und Speichermitteln (7, 8) mit Anwendungs- und Programmdaten zur Anwendung mindestens eines biometrischen Referenzmodells auf die miteinander zu vergleichenden Daten besteht und wobei biometrische Referenzdaten mindestens in Speichermitteln der primären Überprüfungsdomäne gespeichert sind und bei jedem Bezahlvorgang zumindest die primäre Überprüfungsdomäne aktiv ist.

2. System nach Anspruch 1, **dadurch gekennzeichnet, dass** biometrische Referenzdaten auf einer von dem mobilen Endgerät (1) des Käufers aufgenommenen oder in dieses eingefügten Chipkarte (7) zur Identifizierung gegenüber einem Mobilfunkbetreiber, nämlich einer SIM-Karte, einer USIM-Karte oder einer UICC gespeichert sind.

3. System nach Anspruch 1 oder 2, **dadurch gekennzeichnet, dass** die sekundäre Überprüfungsdomäne durch eine Backendeinrichtung oder eine der Backendeinrichtungen (3) des Zahlungsdienstleisters gebildet ist.

4. System nach Anspruch 3, **dadurch gekennzeichnet, dass** biometrische Referenzdaten in einer Datenbank gehalten werden, die in Speichermitteln der die sekundäre Prüfungsdomäne ausbildenden Backendeinrichtung oder Backendeinrichtungen (3) gespeichert ist.

5. System nach Anspruch 1 oder 2, **dadurch gekennzeichnet, dass** das mobile Endgerät (1) mit einer Programmanwendung in Form in einem Speicher des mobilen Endgeräts (1) gehaltener Anwendungs- und Programmdaten zur Realisierung mindestens eines von dem mobilen Endgerät (1) verwalteten und mit ihm für bargeldlose Bezahlvorgänge zu verwendenden virtuellen Zahlungsmittels ausgestattet ist.

6. System nach einem der Ansprüche 1 oder 2, **dadurch gekennzeichnet, dass** die zwischen dem mobilen Endgerät (1) des Käufers und der Kasseneinrichtung (2) des Verkäufers zumindest einmalig temporär während des Bezahlvorgangs bestehende Verbindung (4) eine Funkverbindung ist.

7. System nach Anspruch 6, **dadurch gekennzeichnet, dass** die Funkverbindung eine NFC-Verbindung, nämlich eine Verbindung zur Nahbereichskommunikation, ist.

8. Verfahren zur Durchführung eines bargeldlosen Bezahlvorgangs unter Nutzung eines Bezahlsystems, welches als Basiskomponenten ein mobiles Endgerät (1) eines Käufers, eine elektronische Kasseneinrichtung (2) eines Verkäufers und mindestens eine computerbasierte Backendeinrichtung (3) eines Zahlungsdienstleisters umfasst, wobei der Bezahlvorgang durch den Käufer mittels des von ihm mitgeführten mobilen Endgeräts (1) gegenüber der Kasseneinrichtung (2) autorisiert wird, indem dieser sich authentifiziert und wobei der Bezahlvorgang nur im Falle einer erfolgreichen Authentifizierung ausgeführt wird, **dadurch gekennzeichnet, dass** die Authentifizierung des Käufers mittels an dem mobilen Endgerät (1) erfasster biometrischer Daten erfolgt, welche auf der Grundlage mindestens eines Referenzmodells mit zu einem früheren Zeitpunkt erfassten biometrischen Referenzdaten verglichen werden, die eine zur Verwendung des betreffenden mobilen Endgeräts (1) für bargeldlose Bezahlvorgänge berechtigte Person identifizieren und zumindest in Speichermitteln (7) des Endgeräts (1) abgelegt sind, und dass ein solcher Vergleich zumindest durch eine von dem mobilen Endgerät (1) verarbeitete Programmanwendung (8) erfolgt, welche jedoch einen weiteren Vergleich an dem mobilen Endgerät (1) des Käufers erfasster biometrischer Daten mit biometrischen Referenzdaten durch eine von einer der anderen Basiskomponenten (2, 3) des Bezahlsystems verarbeitete Programmanwendung veranlasst, sofern
a.) ein bei der Durchführung des Vergleichs für das Bestehen einer Übereinstimmung der verglichenen Daten ermittelter Konfidenzwert nicht oberhalb eines festgelegten Mindestwertes, aber innerhalb eines festgelegten Vertrauensintervalls liegt,
oder
b.) eine bei der Durchführung des Vergleichs für das Bestehen einer Übereinstimmung der verglichenen Daten ermittelte Fehlerwahrscheinlichkeit nicht unterhalb eines festgelegten Maximalwertes, aber innerhalb eines für die Fehlerwahrscheinlichkeit festgelegten Zulässigkeitsintervalls liegt.

9. Verfahren zur Durchführung eines bargeldlosen Bezahlvorgangs unter Nutzung eines Bezahlsystems, welches als Basiskomponenten ein mobiles Endgerät (1) eines Käufers, eine elektronische Kasseneinrichtung (2) eines Verkäufers und mindestens eine computerbasierte Backendeinrichtung (3) eines Zahlungsdienstleisters umfasst, wobei der Bezahlvorgang durch den Käufer mittels des von ihm mitgeführten mobilen Endgeräts (1) gegenüber der Kasseneinrichtung (2) autorisiert wird, indem dieser sich authentifiziert und wobei der Bezahlvorgang nur im Falle einer erfolgreichen Authentifizierung ausgeführt wird, **dadurch gekennzeichnet, dass** die Authentifizierung des Käufers mittels an dem mobilen Endgerät (1) erfasster biometrischer Daten erfolgt, welche auf der Grundlage mindestens eines Referenzmodells mit zu einem früheren Zeitpunkt erfassten biometrischen Referenzdaten verglichen werden, die eine zur Verwendung des betreffenden mobilen Endgeräts (1) für bargeldlose Bezahlvorgänge berechtigte Person identifizieren und zumindest in Speichermitteln (7) des Endgeräts (1) abgelegt sind, und dass ein solcher Vergleich zumindest durch eine von dem mobilen Endgerät (1) verarbeitete Programmanwendung (8) erfolgt, welche jedoch einen weiteren Vergleich durch eine von einer der anderen Basiskomponenten (2, 3) des Bezahlsystems verarbeitete Programmanwendung veranlasst sofern der dem Bezahlvorgang zugrunde liegende Bezahlbetrag einen in den Speichermitteln des mobilen Endgeräts (1) gehaltenen Höchstbetrag übersteigt und
a.) ein bei der Durchführung des Vergleichs für das Bestehen einer Identität der verglichenen Daten ermittelter Konfidenzwert nicht oberhalb eines festgelegten Mindestwertes, aber innerhalb eines festgelegten Vertrauensintervalls liegt,
oder
b.) eine bei der Durchführung des Vergleichs für das Bestehen einer Identität der verglichenen Daten ermittelte Fehlerwahrscheinlichkeit nicht unterhalb eines festgelegten Maximalwertes, aber innerhalb eines für die Fehlerwahrscheinlichkeit festgelegten Zulässigkeitsintervalls liegt.

10. Verfahren nach Anspruch 8 oder 13, **dadurch gekennzeichnet, dass** die dem weiteren Vergleich zugrunde gelegten Referenzdaten in einer Datenbank der diesen Vergleich vornehmenden Basiskomponente (2, 3) abgelegt werden.

11. Verfahren nach Anspruch 8, **dadurch gekennzeichnet, dass**
a.) der Bezahlvorgang ausgeführt wird, sofern der für eine Identität der verglichenen biometrischen Daten von der Programmanwendung (8) des mobilen Endgeräts (1) ermittelte Konfidenzwert einen ersten Mindestwert überschreitet,
b.) eine Durchführung des Bezahlvorgangs abgelehnt wird, sofern der für eine Identität der verglichenen biometrischen Daten von der Programmanwendung (8) des mobilen Endgeräts (1) ermittelte Konfidenzwert einen gegenüber dem ersten Mindestwert gemäß a.) niedrigeren zweiten Mindestwert unterschreitet,
c.) sofern der von der Programmanwendung (8) des mobilen Endgeräts (1) für die Identität der verglichenen Daten ermittelte Konfidenzwert gleich dem oder niedriger als der erste Mindestwert gemäß a.), aber wenigstens so hoch wie der zweite Mindestwert gemäß b.) ist, ein nochmaliger Vergleich der mittels des mobilen Endgeräts (1) erfassten biometrischen Daten mit biometrischen Referenzdaten durch eine von einer anderen Basiskomponente (2, 3) des Systems auf der Grundlage eines gegenüber dem ersten Referenzmodell aufwändigeren zweiten Referenzmodells ausgeführte Programmanwendung erfolgt und beim Überschreiten eines im Rahmen dieser Programmanwendung festgelegten Mindestwertes durch den für eine Identität der verglichenen biometrischen Daten ermittelten Konfidenzwert eine Ausführung des Bezahlvorgangs erfolgt, welche andernfalls verweigert wird.

12. Verfahren nach Anspruch 10, **dadurch gekennzeichnet, dass** für den durch die Programmanwendung (8) des mobilen Endgeräts (1) durchgeführten Vergleich komprimierte biometrische Referenzdaten verwendet werden, welche in den Speichermitteln (7) des Endgeräts (1) nach einem verlustbehafteten Kompressionsvorgang abgelegt wurden und für den Vergleich mit den am Endgerät (1) erfassten biometrischen Daten durch die Programmanwendung (8) dekomprimiert werden und dass im Falle eines weiteren, durch eine der anderen Basiskomponenten (2, 3) des Systems durchgeführten Vergleichs für diesen Vergleich biometrische Referenzdaten herangezogen werden, welche in der Datenbank der betreffenden Basiskomponente (2, 3) ohne eine vorrausgehende Kompression abgelegt wurden.

13. Verfahren nach einem der Ansprüche 8 bis 12, **dadurch gekennzeichnet, dass** der weitere durch einer der Basiskomponenten (2, 3) durchgeführte Vergleich erfolgt, wenn für den ersten durch das mobile Endgerät (2) durchgeführten Vergleich eine Konfidenz zwischen 80 % und 90 % ermittelt wird.

14. Verfahren nach einem der Ansprüche 8 bis 13, **dadurch gekennzeichnet, dass** die Durchführung des weiteren Vergleichs durch die oder eine Backendeinrichtung (3) des Zahlungsdienstleisters erfolgt.

15. Verfahren nach einem der Ansprüche 8 bis 14 dass die in dem mobilen Endgerät (1) abgelegten biometrischen Referenzdaten nach einer zusätzlichen nicht während des Kaufvorgangs durchführbaren Authentifizierungsprozedur zu Authentifizierung des Käufers gegenüber dem mobilen Endgerät (1) veränderbar sind.
